# EUROPEAN PATENT APPLICATION

(11) **EP 4 793 971 A1**
(43) Date of publication of application: **19.08.2026**
(21) Application number: 25158121.1
(22) Date of filing: 14.02.2025
(51) Int. Cl.: G21C 1/03, G21C 3/54, G21C 15/18, G21C 15/26, G21C 9/016

(54) **A COOLING SYSTEM FOR A MOLTEN SALT REACTOR**

(71) Applicant: Saltfoss Energy ApS, 2200 Copenhagen (DK)
(72) Inventor: JEONG, Yong Hoon, Daejeon (KR)
(74) Representative: Meissner Bolte Partnerschaft mbB

(57) **Abstract**

The present invention relates to a molten salt reactor cooling system comprising at least one drain tank for containing molten fuel salt, and a reactor containment vessel surrounding the at least one drain tank, said reactor containment vessel being a double-wall structure comprising an inner containment wall and an outer containment wall, and a flow path open to the ambient atmosphere adjoining at least a portion of the outer containment wall, said flow path comprising at least one downcomer duct having an opening to the atmosphere in an upper area thereof and at least one adjacent riser duct having an opening to the atmosphere in a upper area thereof, said riser duct abutting at least a portion of the outer containment wall, the adjacent downcomer and riser ducts being joined together in fluid communication in their lower areas to provide an open circuit for the passage of ambient air from the atmosphere into and downward through a downcomer duct and around back up through a riser duct and out into the atmosphere, wherein, the outer surface of the at least one drain tank is provided with drain tank radiation fins.

## Description

### Field of the invention

The present invention relates to a molten salt reactor cooling system for a molten salt reactor. The cooling system is a passive system that relies on natural convection of air to remove heat. The cooling system can be used to remove decay heat from decaying fission products, where the decaying fission products are contained in molten fuel salt in drain tanks for the molten fuel salt. The present invention furthermore relates to a method of removing decay heat from a molten salt reactor with the molten salt reactor cooling system and a power barge comprising the molten salt reactor cooling system.

### Background of the invention

Molten salt reactors (MSRs) are based on a critical concentration of a fissile material dissolved in a molten salt. The molten salt comprising the fissile material is commonly referred to as the fuel salt or molten fuel salt. Research was conducted on MSRs initially at the Oak Ridge National Laboratory (ORNL) in the 1950's and 1960's but is yet to be successfully commercialised. MSRs have several advantages over other reactor types, including those being in commercial use nowadays. MSRs are capable of breeding fissile U-233 from thorium, of producing much lower levels of transuranic actinide waste than uranium/plutonium fuelled reactors; capable of operating at high temperatures, capable of avoiding accumulation of volatile radioactive fission products in solid fuel rods and capable of utilising larger amounts of fissile material than is possible in conventional reactors. Other particular attractive features of an MSR are the operation at ambient or low pressure and the retention of the fission products as strongly bonded salts which is conventionally either fluoride salts or chloride salts.

The MSR comprises a reactor core where a fission process takes place that produce heat. The heat is transported in the fuel salt that can be pumped out of the core and further downstream along a molten fuel salt loop where a heat exchanger is located to transfer the generated heat to produce electricity in a steam driven electrical turbine.

A molten salt reactor typically also comprises a molten fuel salt drain tank connected to molten fuel salt loop and the drain tank can have the function of holding the molten fuel salt for storage during maintenance but most prominently to provide a safety measure: In case of an emergency, for example a fuel pump failure or a reactivity excursion the fission reaction can be stopped by simply draining the molten fuel salt including the fissile material out of the reactor core and the other parts of the molten fuel salt loop and into a drain tank, thereby removing the fissile material in the molten fuel salt from the core. The molten fuel salt drain tank is conventionally situated at a lower elevation than the reactor core to make use of the gravitational force as a passive way of draining downwards into the drain tank.

Although the drained molten fuel salt does not undergo fission processes, there is still a substantial heat evolution taking place due to the newly formed fission products that are decaying into other unstable nuclei that further decays, each transformation into other nuclei evolving heat. Much of the attention of the safety systems for any type of nuclear reactors in general is focused on the removal of heat arising from the decay of the fission products especially if a breakdown occurs of the normally functioning cooling pumps for conventional light water reactors sometimes described as a loss of cooling accident (LOCA). These occurrences can be the result of a loss of offsite power (LOOP) or for other reasons. The decay heat removal system must be capable of removing several MW of power from the decaying fission products during the first hours and days after the fission process has stopped.

Molten salt reactors (MSRs) are characterized as Generation IV reactor designs and are expected to rely on passive and inherent safety features to remove decay heat for an indefinite period of time. Decay heat removal can take place by cooling the reactor core holding the fissile material or cooling the drain tanks holding the fissile material in the molten salt. Whether the MSR comprises a drain tank or not, two primary methods for cooling the salt can be considered: heat removal through water boiling and heat removal through air cooling. Each method has its distinct advantages and challenges: Water Boiling.

The closed-loop heat removal method effectively prevents air activation due to neutron interactions, thereby minimizing the risk of subsequent leakage. Additionally, it offers substantial heat removal capacity, making it a robust option for cooling.

### Air Cooling.

This method operates on a simpler principle, resulting in lower uncertainty during operation. However, it has a reduced heat removal capacity compared to water boiling and carries the risk of neutron-induced activation. Specifically, the presence of Argon-40 (Ar-40) in the air poses a significant risk, as approximately 0.93% of dry air consists of argon, with 99.6% of that being Ar-40. When exposed to neutrons, Ar-40 can undergo activation through absorption reactions, resulting in the formation of Argon-41 (Ar-41), which has a half-life of 1.8 hours. The external exposure to Ar-41 is considered a major hazard in terms of radiation safety. Examples of decay heat removal systems that rely on air cooling the molten fuel salt are the reactor vessel auxiliary cooling system (RVACS) and the direct reactor auxiliary cooling system (DRACS). Both these systems are cooling near or at the reactor core where neutrons are produced.

US5043135 discloses a passive cooling system for a liquid metal cooled reactor. The liquid metal reactor can be a liquid sodium or metal cooled nuclear reactor for power generation. The cooling system removes the decay heat in a reactor shut-down situation. The fissile material is contained in fuel rods stationary in the reactor core and immersed into a pool of molten metal. The molten metal is contained in a reactor vessel surrounded by a containment vessel. A conduit for air passage runs along the containment vessel and provides a flow of air upwards and out into the ambient atmosphere. Heat is removed from the outside surface of the containment vessel partly by thermal radiation and partly by direct convection to the circulating air in the passage between the containment vessel and a shield.

US4678626 discloses a passive auxiliary cooling system for a liquid metal cooled breeder reactor. The liquid metal reactor can be a liquid sodium or metal cooled nuclear reactor. The cooling system helps in removing the decay heat in a reactor shut down situation. The fissile material is contained in fuel rods stationary in the reactor core and immersed into a pool of molten metal. The molten metal is contained in a reactor vessel surrounded by a containment vessel. A conduit for air passage runs along the containment vessel in the space between the containment vessel and a shell and provides a flow of air upwards and out into the ambient atmosphere. Longitudinal, radial and inwardly extending fins extend from the shell into the air passage. The fins are heated by radiation from the containment vessel and convect the heat to the circulating air. The containment vessel is conventional and is surrounded by the shell.

US2019035510 discloses a cooling system to remove decay heat from the nuclear core of a molten salt reactor. The cooling has a conduit structure that defines a sealed closed circuit through which for example air is circulating through natural convection. It is stated that the possibility of activation of air and Ar-41 exists due to neutrons escaping the reactor vessel. The solution is to provide a closed, sealed loop that prevents air to escape to the atmosphere. The cooling system is continuously extracting heat from the nuclear core.

### Summary of the invention

It was an object of the present invention to provide an improved decay heat removal system for a molten salt reactor.

It was an object of the present invention to provide a method for removing decay heat for a molten salt reactor that results in a temperature of the construction materials of the molten salt reactor that are lower than the endorsement temperature limit for construction materials set by a regulatory body.

In accordance with an aspect of the invention, there is provided a molten salt reactor cooling system comprising at least one drain tank for containing molten fuel salt, and a reactor containment vessel surrounding the at least one drain tank, said reactor containment vessel being a double-wall structure comprising an inner containment wall and an outer containment wall, and a flow path open to the ambient atmosphere adjoining at least a portion of the outer containment wall, said flow path comprising at least one downcomer duct having an opening to the atmosphere in an upper area thereof and at least one adjacent riser duct having an opening to the atmosphere in a upper area thereof, said riser duct abutting at least a portion of the outer containment wall, the adjacent downcomer and riser ducts being joined together in fluid communication in their lower areas to provide an open circuit for the passage of ambient air from the atmosphere into and downward through a downcomer duct and around back up through a riser duct and out into the atmosphere, wherein, the outer surface of the at least one drain tank is provided with drain tank radiation fins.

In accordance with another aspect of the invention, there is provided a method of removing decay heat from a molten salt reactor with a molten salt reactor cooling system according to the aspect above of the molten salt reactor cooling system.

In accordance with yet another aspect of the invention, there is provided a power barge comprising the molten salt reactor cooling system according to the aspect above of the molten salt reactor cooling system.

### Detailed Description

The molten salt reactor cooling system comprising at least one drain tank for containing molten fuel salt, and a reactor containment vessel surrounding the at least one drain tank, said reactor containment vessel being a double-wall structure comprising an inner containment wall and an outer containment wall, and a flow path open to the ambient atmosphere adjoining at least a portion of the outer containment wall, said flow path comprising at least one downcomer duct having an opening to the atmosphere in an upper area thereof and at least one adjacent riser duct having an opening to the atmosphere in a upper area thereof, said riser duct abutting at least a portion of the outer containment wall, the adjacent downcomer and riser ducts being joined together in fluid communication in their lower areas to provide an open circuit for the passage of ambient air from the atmosphere into and downward through a downcomer duct and around back up through a riser duct and out into the atmosphere, wherein, the outer surface of the at least one drain tank is provided with drain tank radiation fins.

We find that such a molten salt reactor cooling system has several advantages over the prior art. The cooling system is an "once-through" air cooling system that allows ambient air to be circulated in and out through the conduits of the cooling system but without activation of the ambient air. By removing decay heat from a drain tank containing molten fuel salt, the neutron generation can be disregarded, thereby allowing to ignore the air activation issue typically raised in an RVACS (reactor vessel auxiliary cooling system) as mentioned above. The once-through air cooling method involves cold air entering the system, absorbing heat from the drain tank, and being immediately discharged outside. This approach eliminates the need for an upper air heat exchanger, simplifying the system design.

The air-cooled decay heat removal system has the advantage of being a cooling method that requires no operator intervention, such as additional coolant replenishment, as it performs cooling solely through natural air circulation.

In one embodiment, there is provided a molten salt reactor cooling system comprising at least one drain tank for containing molten fuel salt, and a reactor containment vessel surrounding the at least one drain tank, said reactor containment vessel being a double-wall structure comprising an inner containment wall and an outer containment wall, and a flow path open to the ambient atmosphere adjoining at least a portion of the outer containment wall, said flow path comprising at least one downcomer duct having an opening to the atmosphere in an upper area thereof and at least one adjacent riser duct having an opening to the atmosphere in a upper area thereof, said riser duct abutting at least a portion of the outer containment wall, the adjacent downcomer and riser ducts being joined together in fluid communication in their lower areas to provide an open circuit for the passage of ambient air from the atmosphere into and downward through a downcomer duct and around back up through a riser duct and out into the atmosphere, wherein, the outer surface of the at least one drain tank is provided with drain tank radiation fins.

The molten salt reactor core is located in a radiation shielded reactor containment, preferably comprising a double-walled structure. Other reactor components of the reactor wherefrom radiation may arise are also within the reactor containment, such as one or more drain tanks for holding molten fuel salt. The reactor core along with a molten fuel salt pump, a heat exchanger for molten fuel salt are all connected by a piping to form a loop for circulating molten fuel salt between these reactor components. The above-mentioned components are preferably located in an upper compartment of the reactor containment, and the one or more drain tanks are located in a lower compartment of the reactor containment. Several conduits such as piping enable the flow of molten fuel salt from the molten fuel salt loop in the upper compartment to the one or more drain tanks in the lower compartment. The division in an upper and lower compartment enables different temperature regimes in each compartment.

In one embodiment, the reactor compartment has a rectangular perimeter.

In one embodiment, the reactor compartment has a circular perimeter.

The drain tank radiation fins are provided on the surface of the drain tanks and are preferably extending in the whole height of the drain tank. The fins may be fastened by welding or other fastening means.

The double-walled reactor containment vessel, has an inner containment wall and an outer containment wall, preferably made of stainless steel.

The outer containment wall is facing a flow path for air flowing upwards due to the heat from the outer containment wall. One or more riser ducts around at least part of the perimeter of the outer containment wall confine the flow path or flow paths and these riser ducts preferably form vertical channels each with an open end for the air flow to mix into the ambient atmospheric air. The open end is preferably at the top of the reactor containment. Atmospheric air can enter one or more downcomer ducts, preferably near the top of the reactor containment. The one or more downcomer ducts are in fluid communication with the one or more riser ducts so that the air may enter at the top of a downcomer duct and flow downwards and enter the bottom of a riser duct.

In one embodiment, more than one riser duct is abutting the entire surface of the outer containment wall, and more than one downcomer duct is adjacent the more than one riser ducts, preferably on the outside of the riser ducts away from the outer containment wall.

In one embodiment, the riser duct height is in the interval of 10 to 70 meters, preferably 15 to 40 meters.

In one embodiment, the outer surface area of the one or more drain tanks is increased with a multiplication factor due to the drain tank radiation fins with a magnitude in the interval of 2 to 8, such as 2 to 7, preferably 3 to 7.

In one embodiment, the molten salt reactor cooling system is a decay heat removal system.

In one embodiment, the molten salt reactor cooling system is an air-cooling system.

In one embodiment, the molten fuel salt has a composition selected from the group of compositions of:
sodium fluoride + potassium fluoride + uranium fluoride;
lithium fluoride + thorium fluoride + plutonium fluoride;
lithium fluoride + thorium fluoride + uranium fluoride;
lithium fluoride + beryllium fluoride + uranium fluoride;
lithium fluoride + beryllium fluoride + uranium fluoride + thorium fluoride; lithium fluoride + beryllium fluoride + uranium fluoride + thorium fluoride + zirconium fluoride;
sodium fluoride + rubidium fluoride + uranium fluoride; and sodium fluoride + beryllium fluoride + uranium fluoride + thorium fluoride + zirconium fluoride.

In one embodiment, the reactor containment vessel is provided with interspace radiation fins in the interspace between the inner containment wall and the outer containment wall.

In one embodiment, the surface area of the walls forming the interspace between the inner containment wall and the outer containment wall is increased with a multiplication factor due to the interspace radiation fins with a magnitude in the interval of 2 to 8, preferably 3 to 7 or 2 to 5.

The transfer of heat between the two walls of the double-walled reactor containment vessel takes place in the interspace between these two walls, that is the inner containment wall and an outer containment wall. There is preferably no convection of gas or air present in this interspace to transfer heat, eliminating the need to optimize air flow. It is therefore found possible to have a relatively high increase in surface area by installing interspace fins in spaces where there are no requirements of minimizing air flow resistance.

For example, with an interspace gap of 100mm between the inner containment wall and the outer containment wall and interspace radiation fin dimensions of length of 90mm, thickness of 10mm, and spacing of 30mm the surface area is increased by 7 times. The view factor is of the order of 0.8, so an overall approx. 5-fold enhancement in radiation heat transfer is expected.

Note that within the technical field of radiative heat transfer, a view factor is the proportion of the radiation which leaves one surface A and strikes another surface B. The enhancement is calculated as the surface area multiplication factor times the view factor, thus 7 times approx. 0.8 equal to approx. 5.

In one embodiment, the interspace radiation fins have an interlocked pattern.

The surface area of the surfaces of the inner containment wall and the outer containment wall facing each other in the interspace between these two walls can be increased to a relatively high degree as explained above. One advantageous way of providing the interspace radiation fins is to let them form an interlocked pattern. The interlocked radiation fins are preferably not touching each other in the interspace between the two containment walls so that the heat transfer takes place via radiation heating.

Practical methods to enhance the heat transfer is, for example, placing fins on both opposing walls to create an interlocking pattern and maximizing the view factor between fins by aligning them directly across from each other.

The gap between facing fins in the interspace provides a sufficient space for the relative thermal expansion of the inner containment wall and the outer containment wall which is an important consideration in high-temperature performance. This design solution of using radiation fins in a confined spaces such as the interspace between the inner containment wall and the outer containment wall is more robust than using solid metal connectors, balls, powders in the interspace as it allows for flexibility and reduces stress concentrations.

In one embodiment, the outer surface of the outer containment wall is provided with outer radiation fins.

In one embodiment, the area of the outer surface of the outer containment wall is increased with a multiplication factor due to the outer radiation fins with a magnitude in the interval of 1.5 to 6, preferably 2.5 to 5 or 1.5 to 3.

In one embodiment, an air separator is provided in the flow path and the air separator is provided with separator radiation fins facing the outer containment wall.

The downcomer and the riser ducts may be separated by an air separator in the whole height of the ducts. Preferably, the air separator is provided with thermal insulation that is thermally insulating the hot air in the one or more riser ducts from the cold air in the adjacent one or more downcomer ducts.

In one embodiment, separator fins are provided on the air separator.

In one embodiment, the area of the air separator facing the outer containment wall is increased with a multiplication factor due to the separator radiation fins with a magnitude in the interval of 1.5 to 6, preferably 2.5 to 5 or 1.5 to 3.

The previously mentioned considerations for fin shape and size apply equally here. The heat transfer enhancement rate for radiative heat transfer between the outer reactor containment wall and the air separator when using fin structures is calculated similarly to the case for transfer between the inner containment wall and the outer containment wall. However, for the case of heat transfer across the air flow path there are additional considerations for the fin design due to the air flow, such as:
- Fin orientation: Fins are preferably aligned parallel to the airflow. This minimizes air resistance and promotes efficient heat exchange.
- Fin spacing: The spacing between fins is preferably wide enough to allow smooth airflow. If too narrow, it can obstruct air flow and increase pressure drop. In one embodiment, the fin spacing is in the interval of 20 to 60 mm, such as 25 to 50 mm.
- Fin thickness: Fins are preferably thick enough for heat conduction but not so thick as to obstruct airflow. In one embodiment, the fin thickness is in the interval of 5 to 20 mm, such as 8 to 15 mm.
- Fin shape: Using aerodynamic fin shapes can further reduce air resistance. For example, fins with rounded leading edges obstruct airflow less than those with sharp edges.
- Fin arrangement: The arrangement pattern of fins also affects airflow. Zigzag patterns or offset arrangements can enhance heat transfer while maintaining airflow.

By considering these factors in designing the fin structure, radiative heat transfer can be effectively enhanced while minimizing interference with airflow.

In one embodiment, the separator radiation fins, and the outer radiation fins are aligned parallel to the airflow in the flow path.

In one embodiment, the separator radiation fins, and the outer radiation fins have an aerodynamic shape, preferably a teardrop shape, preferably an aerofoil shape.

In one embodiment, the separator radiation fins are provided on the air separator surface in the upgoing air flow in rows one above the other and separator radiation fins in one row is displaced horizontally from separator radiation fins in the neighbouring row.

In one embodiment, the outer radiation fins are provided on the outer surface of the outer reactor containment wall in the upgoing air flow in rows one above the other and outer radiation fins in one row is displaced horizontally from outer radiation fins in the neighbouring row.

In one embodiment, the separator radiation fins, or the outer radiation fins are made of aluminium or copper or alloys thereof.

The overall heat transfer paths for the molten salt reactor cooling system can be summarised as a radiative heat transfer from the drain tanks to the inner containment wall; a radiative heat transfer between the inner containment wall and the outer containment wall; a radiative heat transfer between the outer containment wall and the air separator. The above surfaces exchange thermal radiation which depends on their emissivity and temperatures.

Furthermore, there is convective heat transfer between the outer containment wall and the air flow and convective heat transfer between the air separator and the air flow. The convective heat transfer involves the movement of air and the exchange of thermal energy.

The material selection for the radiation fins preferably favour a high thermal conductivity and a high emissivity. This is preferably the case for any of the radiation fins selected from the group of drain tank radiation fins, interspace radiation fins, outer radiation fins and separator radiation fins.

In one embodiment, one or more of the fins selected from the group of the drain tank radiation fins, interspace radiation fins, outer radiation fins or separator radiation fins are made of a steel alloy and has been oxidised to provide an oxidised surface layer. Preferred steel alloys are stainless-steel alloys, such as austenitic stainless-steel alloys or ferritic stainless-steel alloys. Preferred alloys are those specified on the list of "ASME Boiling and Pressure Vessel Code (BPVC), Section III - Rules for Construction of Nuclear Facility Components, Division 5 - High Temperature Reactors, 2023", such as an alloy selected from the group of alloys of 304SS, 316SS, 800H, 2¼Cr-1Mo steel, 9Cr-1Mo-V steel.

The emissivity coefficient is preferably as high as possible to enable an efficient transfer of heat by radiation heat transfer. The emissivity coefficient, ε denotes the radiation of heat from a body according to the Stefan-Boltzmann Law, compared with the radiation of heat from a black body where the emissivity coefficient ε = 1. The values of ε are between 0 and 1.

In one embodiment, the emissivity coefficient for one or more of the fins selected from the group of the drain tank radiation fins, interspace radiation fins, outer radiation fins or separator radiation fins is in the interval of 0.5 to 0.96, preferably 0.6 to 0.9, preferably 0.65 to 0.85.

In one embodiment, the emissivity coefficient for one or more of the drain tank outer surfaces, the interspace surfaces of the inner and outer containment walls, the surface area of the outer surface of the outer containment wall, and the surface of the air separator wall facing the outer surface of the outer containment wall, has an emissivity coefficient in in the interval of 0.5 to 0.96, preferably 0.6 to 0.9, preferably 0.6 to 0.85.

An advantageous way of increasing the emissivity coefficient of especially the various types of radiation fins comprised in the MSR cooling system is to oxidise the surface of the fins. Allowing a stainless-steel surface to naturally oxidize or intentionally oxidizing it can significantly increase its emissivity. Oxidized stainless steel may have an emissivity of around 0.8. It is found that this way of increasing the emissivity coefficient is simple and reliable. Other ways to increase the emissivity coefficient are the following:
- Surface Roughening: Creating a rougher surface texture on stainless steel can increase its emissivity. This can be achieved through mechanical methods such as sandblasting or chemical etching.

In one embodiment, or more of the fins selected from the group of the drain tank radiation fins, interspace radiation fins, outer radiation fins or separator radiation fins has been treated by surface roughening.
- High Emissivity Coatings: Applying specialized high emissivity coatings to a stainless-steel surface can dramatically increase its emissivity. These coatings can achieve emissivity values between 0.85 and 0.95, remaining constant up to high temperatures.

In one embodiment, the surface of one or more of the fins selected from the group of the drain tank radiation fins, interspace radiation fins, outer radiation fins or separator radiation fins has been applied with a high emissivity coating.
- Anodizing: While more commonly used for aluminium, anodizing can also be applied to stainless steel to increase its emissivity.

In one embodiment, the surface of one or more of the fins selected from the group of the drain tank radiation fins, interspace radiation fins, outer radiation fins or separator radiation fins has been treated with an anodizing process.
- Thin Film Deposition: Techniques such as Physical Vapor Deposition (PVD) can be used to apply thin films with high emissivity to the stainless-steel surface.

In one embodiment, the surface of one or more of the fins selected from the group of the drain tank radiation fins, interspace radiation fins, outer radiation fins or separator radiation fins has been applied with a PVD coating.
- Textured Finishes: Applying a textured or matte finish to the stainless-steel surface can increase its emissivity compared to a polished surface. These methods can realistically increase the emissivity of stainless-steel surfaces from the assumed 0.5 to values ranging from 0.7 to 0.8.

In one embodiment, the surface of one or more of the fins selected from the group of the drain tank radiation fins, interspace radiation fins, outer radiation fins or separator radiation fins has been applied with a textured finishing.

In one embodiment, one or more of the radiation fins selected from the group of drain tank radiation fins, interspace radiation fins, outer radiation fins, separator radiation fins are formed as a continuous structure extending vertically in the whole height of the surface whereon the one or more fins are provided on.

In one embodiment, one or more of the radiation fins selected from the group of drain tank radiation fins, interspace radiation fins, outer radiation fins, separator radiation fins are provided as separate fins extending vertically on the surface whereon the one or more fins are provided on in a height of 3 cm to 25 cm, preferably 5 cm to 20 cm.

In one embodiment, there is provided a method of cooling a molten salt reactor with a molten salt reactor cooling system according to the invention, in particular according to any one of claims 1-11.

In one embodiment, there is provided a method of removing decay heat from a molten salt reactor with a molten salt reactor cooling system according to the invention, in particular according to any one of claims 1 to 11.

In one embodiment, there is provided a method of removing decay heat from a molten salt reactor, wherein the molten fuel salt is drained from a molten fuel salt loop comprising a molten salt reactor core into one or more drain tanks, and the decay heat is transferred passively from the one or more drain tanks to the flow path open to the ambient atmosphere.

In one embodiment, there is provided a method of removing decay heat from a molten salt reactor, wherein the maximum peak temperature of the outer surface of the one or more drain tanks is in the interval of 650 °C to 725 °C, preferably 670 °C to 723 °C, preferably 670 °C to 710 °C, preferably 680 °C to 700 °C.

In one embodiment, the maximum peak temperature of the outer surface of the one or more drain tanks is in the interval of 650 °C to 725 °C, preferably 670 °C to 710 °C, preferably 680 °C to 700 °C.

The drain tank design temperature limit may be set below the US Nuclear Regulatory Commission (NRC) endorsement temperature limit (725°C) for 316SS, stainless steel. 316SS has been endorsed for operation at 725°C for 300,000 hours and at 800°C for 30,000 hours. Therefore, it is considered reasonable to set the design temperature limit of the drain tank at 700°C. Even at 800°C, it is deemed acceptable for transient conditions lasting several days.

In one embodiment, there is provided a method of removing decay heat from a molten salt reactor wherein the duration from the initial temperature 650 °C until the maximum peak temperature of the outer surface of the one or more drain tanks is obtained, is in the interval of 0.5 h to 6 h, preferably 1 h to 4 h.

In one embodiment, there is provided a power barge comprising a molten salt reactor cooling system according to the invention, in particular according to any one of claims 1 to 11.

The once-through air cooling method that is achieved with a reactor cooling system according to the invention provides a solution that fits the requirement on board a maritime vessel such as a barge. This is appreciated when considering the size of the area of an upper heat exchanger required for air cooling in a closed-loop system. Installing an air heat exchanger for air-cooling on a barge becomes impractical. With the solution according to the invention since there is no neutron activation of the flowing air and no necessity for a closed-loop air cooling system.

### Brief description of the drawings

In the following the invention will be explained in greater detail with the aid of an example and with reference to the schematic drawings, in which:
Figure 1 shows a molten salt reactor cooling system according to the invention, in a vertical cross-section;
figure 2 shows a first embodiment of the interspace radiation fins between the inner and outer containment walls, in horizontal cross-section;
figure 3 shows a second embodiment of the interspace radiation fins between the inner and outer containment walls, in horizontal cross-section;
figure 4 shows a rectangular section of the outer containment wall with outer radiation fins, in a vertical cross-section;
figure 5 shows the temperature evolution at various points of the molten salt reactor and cooling system;
figure 6 shows the heat generation from the decaying fission products and heat transfer by the molten salt reactor cooling system.

### Reference signs list

- 1: A drain tank.
- 2: Molten fuel salt.
- 3: A reactor containment vessel.
- 4: An inner containment wall.
- 5: An outer containment wall.
- 6: The ambient atmosphere.

- 7: A downcomer duct.
- 8: A riser duct.
- 9: A drain tank radiation fin.
- 10: An interspace radiation fin.
- 11: An outer radiation fin.
- 12: An air separator.
- 13: A separator radiation fin.
- 14: A molten salt reactor core.

The invention is not limited to the embodiment/s illustrated in the drawings. Accordingly, it should be understood that where features mentioned in the appended claims are followed by reference signs, such signs are included solely for the purpose of enhancing the intelligibility of the claims and are in no way limiting on the scope of the claims.

The term "comprising" as used in this specification and claims means "consisting at least in part of". When interpreting statements in this specification and claims which include the term "comprising", other features besides the features prefaced by this term in each statement can also be present. Related terms such as "comprise" and "comprised" are to be interpreted in a similar manner.

### Detailed Description

The invention will now be illustrated in the following non-limiting examples.

### Example 1

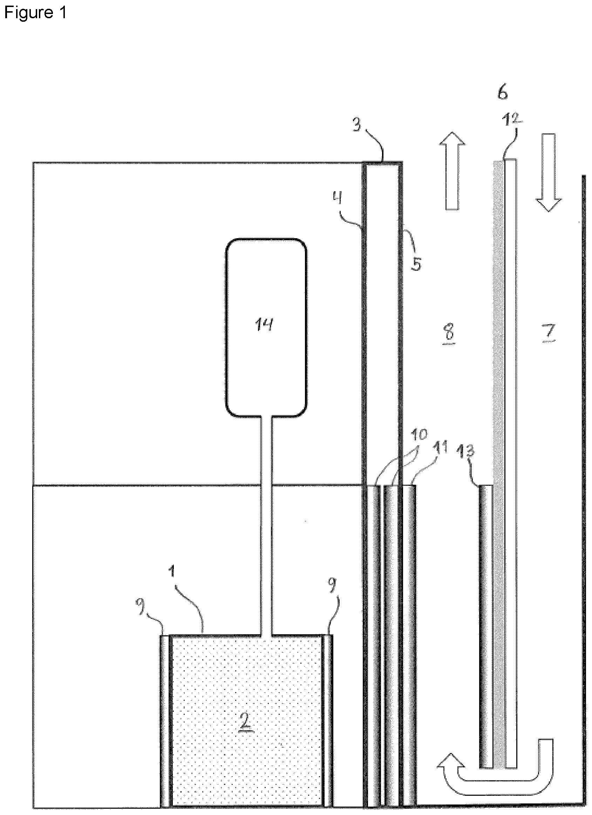

In this example, a molten salt reactor cooling system according to the invention is shown with reference to figure 1. A drain tank 1 is shown inside a reactor containment vessel 3, where the drain tank 1 is shown in a lower compartment and is filled with molten fuel salt 2 that has been drained from the reactor core 14 in an upper compartment and the rest of the molten fuel salt loop (not shown). The lower and the upper compartment are separated by a horizontal floor construction with a pipe penetrating the floor, said pipe extending from the reactor core 14 to the drain tank 1. The molten salt reactor cooling system is shown in cross section and the cross-section cuts through two drain tank radiation fins 9 that are extending continuously in the whole height of approx. 3 m of the drain tank 1. The decay heat from the fission products in the molten fuel salt 2 radiates from the drain tank and the drain tank radiation fins 9 and to the double-walled reactor containment vessel 3, having an inner containment wall 4 and an outer containment wall 5, each being 5 cm thick. Two interspace radiation fins 10 are seen in cross section, extending in the whole height of approx. 6 m of the lower compartment in cross section in the interspace between the inner containment wall 4 and the outer containment wall 5. An outer radiation fin 11 is shown on the outer side of the outer containment wall 5. The outer radiation fin 11 is also extending like the interspace radiation fin 10 in the whole height of the lower compartment. The outer radiation fin 11 is located in the flow path of a riser duct 8. A downcomer duct 7 is shown adjacent to the riser duct, said downcomer duct 7 and riser duct 8 being separated by an air separator 12 in the whole height of the ducts (7, 8) which is approx. 20 m. The air separator 12 is shown with a thermal insulation (white shaded) that is thermally insulating the hot air in the riser duct 8 from the cold air in the downcomer duct 7. A separator fin 13 on the air separator 12 is shown in cross section extending in the whole height of the lower compartment. The air flows upwards in the riser duct as shown by arrows and the heat radiated from the outer surface of the outer containment wall 5 is transported by natural convection in the air flow out of the riser duct 8 into the ambient, atmospheric air 6. Colder, ambient atmospheric air is sucked into the downcomer duct 7 and flows downwards into the lower area below the air separator where it is joined by the hot rising air in the riser duct 8.

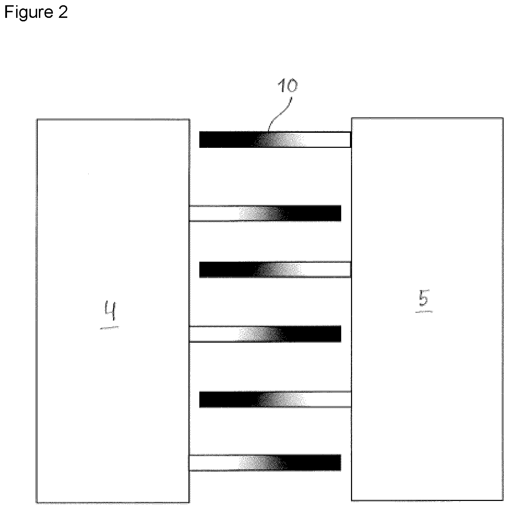

The interspace radiation fins 10 are shown in horizontal cross-section in figure 2 in an interlocking pattern where two interspace radiation fins 10 on the inner containment wall 4 are shown between three interspace radiation fins 10 on the outer containment wall 5, and vice versa. The "interlocked" radiation fins 10 are not touching each other in the interspace between the two containment walls but are merely in an interlocked pattern so that radiation heat can be transferred between the interspace radiation fins 10. The shown interspace radiation fins 10 in fig. 2 multiplies the area of the inner and outer containment walls by a factor of 3.0 and the fins are welded onto the walls. The shown interspace gap between the inner and outer containment walls is 10 cm, the fins have a length into the gap of 40 mm, a thickness of 10 mm and are spaced apart in the vertical direction by 30 mm, from fin-edge to fin-edge.

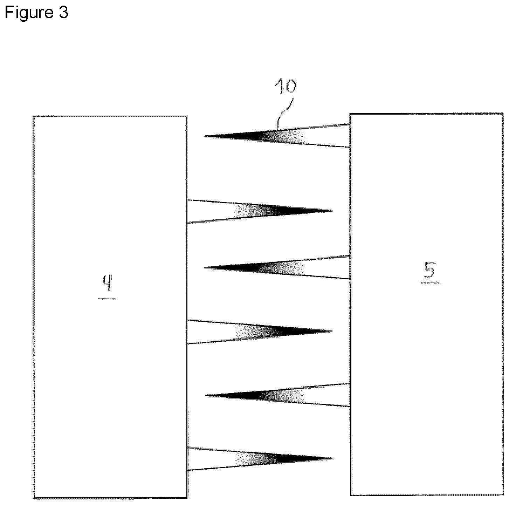

A second embodiment of interspace radiation fins 10 are shown in horizontal cross-section in figure 3 in an interlocking pattern. The dimensions of the gap and the fins are the same as the example shown in fig. 2 except that the thickness of 10 mm decreases continuously along the length going in the direction from the containment wall into the gap.

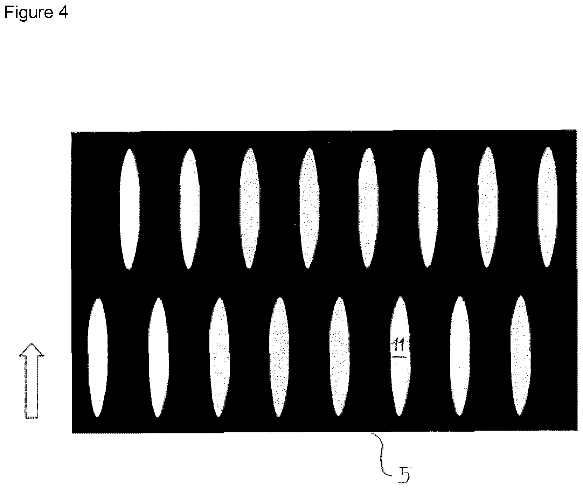

An example of the outer radiation fins 11 is shown in fig. 4. The outer radiation fins 11 have an aerodynamic shape that allows a more efficient convection heat transfer in the upwards direction of the air flow as shown with an arrow. The outer radiation fins 11 are welded on the outer surface of the outer containment wall in rows, one above the other and outer radiation fins 11 in one row is displaced horizontally from outer radiation fins 11 in the neighbouring row, which again allows a more efficient convection heat transfer upwards.

### Example 2

This Example shows the enhancement in radiation from a drain tank that can be achieved by providing a drain tank with radiation fins. The Example provides calculations for two drain tanks side-by-side with a distance between the two drain tanks of 6m or 8m. The results are listed in Table 1 below.

The case no. 3 for example shows that when providing 314 fins protruding with a length of 18.5mm outwards from the drain tank surface, the surface area was doubled, see the "Area Factor" (also referred to as the Multiplication factor of the outer surface area of the drain tank). The view factor decreased to 0.527 compared to the unobstructed view without fins. The overall enhancement ratio in radiation is compared to a situation without fins considering both area increase, and view factor change. For example, case 3 of Table 1 shows an enhancement of 1.47 over the comparable case 2 of Table 1 without fins. Increasing the fin length to 37mm triples the area and further reduces the view factor to 0.479. The overall enhancement factor was 1.6, see case 4.

With 74mm long fins, the overall enhancement was 3.13, see case 5.

**Table 1**

| Case | Drain tank spacing [m] | Fin length [mm] | Fin thickness [mm] | # of fin per Drain tank | Area Factor | View factor (V) | Enhance ratio |
|---|---|---|---|---|---|---|---|
| 1 | 6 | 0 | 0 | 0 | 1 | 0.693 | 0.97 |
| 2 | 8 | 0 | 0 | 0 | 1 | 0.715 | 1.00 |
| 3 | 8 | 18.5 | 1 | 314 | 2 | 0.527 | 1.47 |
| 4 | 8 | 37 | 1 | 314 | 3 | 0.479 | 1.60 |
| 5 | 8 | 74 | 1 | 314 | 5 | 0.448 | 3.13 |
| 6 | 8 | 111 | 1 | 314 | 7 | 0.439 | 4.30 |
| 7 | 8 | 111 | 5 | 314 | 7 | 0.439 | 4.30 |
| 8 | 8 | 111 | 10 | 314 | 7 | 0.440 | 4.31 |

### Example 3

This Example shows the cooling performance of the molten salt reactor cooling system according to the invention for the cooling of a drain tank containing decaying fission products.

The Example is calculated for the case of two drain tanks side-by-side with a spacing between them of 8m, both drain tanks located inside a lower reactor compartment measuring 18m X 8m X 6m (length X width X height of the outer wall of a double-wall structure). The reactor compartment is assumed to be heated up to a height of 6m, thus the entire height of the lower compartment. Transient calculations for the case of using two drain tanks were performed. The volume of the fuel salt was assumed to be around 75 m³, with a density around 4000 kg/m³ and a specific heat capacity of approx. 850 J/kg·K. An initial temperature of 650°C was also assumed, and the temperature changes were calculated based on the amount of heat evolved caused by the decay of fission products and the heat removed due to the molten salt reactor cooling system. The air inlet temperature was set to 45 °C.

The assumed decay heat power evolution for a molten salt reactor with a nominal production of 250 MW thermal power was estimated with a modified Wigner-Way formula.

The gap between the outer reactor compartment wall and the air separator was 0.1m.

Some of the following surfaces were provided with radiation fins, as further specified in Table 2: The drain tank outer surfaces, the interspace surfaces of the inner and outer containment walls, the surface area of the outer surface of the outer containment wall, and the surface area of the air separator wall facing the outer surface of the outer containment wall.

A value of 1 as seen in Table 2 for the multiplication factor of a surface area means that no radiation fins were provided on the respective surface.

The multiplication factor of the surface areas as well as the view factors were calculated for these surfaces taking the fin dimensions and numbers into account, see exemplary calculations in Table 1.

Some assumptions for the emissivity value of the walls were also made and the values are stated as 0.5 or 0.7.

In should be mentioned that the thermal capacities of the drain tank wall, and other walls were not considered in this analysis. Including these factors would most likely result in lower maximum peak temperatures.

The result of the calculation in each case in Table 2 is stated as the maximum peak temperature of the outer wall of the drain tanks and the duration from the start with an initial temperature of 650 °C until the maximum peak temperature is obtained. A high maximum peak temperature deteriorates the constructional alloy and is unwanted. A long duration time until a too high maximum peak temperature is reached means that the drain tank walls is exposed to a high temperature in a long time before the temperature starts to decline again, following the natural decline in heat from the fission products; this is also an unwanted situation.

As shown in Case 1 of Table 2 where no heating fins are provided, and there are no heat transfer enhancement measures at all, the drain tank temperature far exceeds the target of 725 °C. Furthermore, the time duration in a high temperature regime is long. Another observation from the Table 2 is that even when radiation fins are provided on all the other above-mentioned surfaces except the drain tanks, this still results in an unwanted high value of the maximum peak temperature of 819 °C. Providing radiation fins on all the above-mentioned surfaces, on the contrary results in acceptable maximum peak temperatures and even several max. temperatures lower than the US Nuclear Regulatory Commission (NRC) endorsement temperature limit of 725°C for Stainless Steel 316 as a construction material.

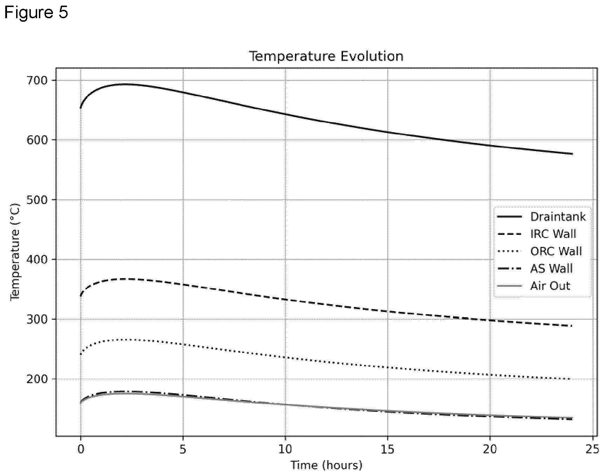

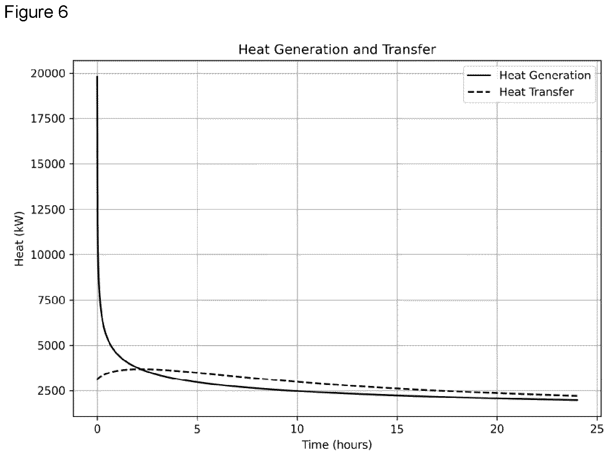

The temperature evolution and heat generation and transfer for the case of removing decay heat are illustrated in figure 5 and 6 in more detail for the Case 10 of Table 2.

Figure 5 shows the drain tank temperature at start at 650 °C at time 0 hours and then rise due to the heat generation from the decaying fission products. The heat generation follows the slope seen in figure 6, where there is a noticeably high heat generation at the start that is rapidly declining the first hour after start. During the approx. first two hours, the drain tank wall temperature continues to rise until it peaks at 693 °C. The temperatures of all of: The inner containment wall (IRC Wall), the outer containment wall (ORC Wall), the air separator facing the outer containment wall (AS Wall) and the outlet air, at the outlet of the riser duct (Air Out) all follow the same temperature evolution curve although, peaking at much lower temperatures than for the drain tank wall. It is also seen in figure 6 that the heat transfer rate and thus heat removal rate surpasses the heat generation rate at around 2 hours after start.

**Table 2**

| Case | Air duct height [m] | Multiplication factor of the outer surface area of the drain tank / View Factor | Multiplication factor of the interspace surface area of the inner and outer containment walls | Multiplication factor of the surface area of the outer surface of the outer containment wall | Multiplication factor of the surface area of the air separator wall facing the outer surface of the outer containment wall | Emissivity coefficient of the drain tank walls | Emissivity coefficient of the inner and outer containment walls | Maximum peak temperature of the drain tank outer walls, tₘₐₓ [°C] | Duration from the initial temperature 650 °C to the maximum peak temperature is obtained [h] |
|---|---|---|---|---|---|---|---|---|---|
| 1 | 20 | 1/0.7 | 1 | 1 | 1 | 0.5 | 0.5 | 863 | 14 |
| 2 | 20 | 5/0.4 | 1 | 1 | 1 | 0.5 | 0.5 | 750 | 6 |
| 3 | 40 | 5/0.4 | 1 | 1 | 1 | 0.5 | 0.5 | 745 | 6 |
| 4 | 60 | 5/0.4 | 1 | 1 | 1 | 0.5 | 0.5 | 744 | 6 |
| 5 | 60 | 5/0.4 | 2 | 1 | 1 | 0.5 | 0.5 | 723 | 4 |
| 6 | 20 | 5/0.4 | 2 | 1 | 1 | 0.5 | 0.5 | 730 | 5 |
| 7 | 20 | 5/0.4 | 3 | 1 | 1 | 0.5 | 0.5 | 723 | 4 |
| 8 | 20 | 5/0.4 | 3 | 2 | 2 | 0.5 | 0.5 | 703 | 3 |
| 9 | 20 | 5/0.4 | 5 | 2 | 2 | 0.5 | 0.5 | 697 | 3 |
| 10 | 20 | 5/0.4 | 5 | 3 | 3 | 0.5 | 0.5 | 693 | 2 |
| 11 | 20 | 1/0.7 | 5 | 3 | 3 | 0.5 | 0.5 | 819 | 11 |
| 12 | 20 | 2/0.6 | 5 | 3 | 3 | 0.5 | 0.5 | 740 | 5 |
| 13 | 20 | 2/0.6 | 5 | 3 | 3 | 0.7 | 0.7 | 703 | 3 |
| 14 | 20 | 5/0.4 | 5 | 3 | 3 | 0.7 | 0.7 | 672 | 1 |

## Claims

1. A molten salt reactor cooling system comprising at least one drain tank 1 for containing molten fuel salt 2, and
- a reactor containment vessel 3 surrounding the at least one drain tank 1, said reactor containment vessel 3 being a double-wall structure comprising an inner containment wall 4 and an outer containment wall 5, and
- a flow path open to the ambient atmosphere 6 adjoining at least a portion of the outer containment wall 5, said flow path comprising at least one downcomer duct 7 having an opening to the atmosphere in an upper area thereof and at least one adjacent riser duct 8 having an opening to the atmosphere in a upper area thereof, said riser duct 8 abutting at least a portion of the outer containment wall 5, the adjacent downcomer 7 and riser 8 ducts being joined together in fluid communication in their lower areas to provide an open circuit for the passage of ambient air from the atmosphere 6 into and downward through a downcomer duct 7 and around back up through a riser duct 8 and out into the atmosphere 6, wherein,
- the outer surface of the at least one drain tank is provided with drain tank radiation fins 9.

2. A molten salt reactor cooling system according to claim 1, wherein the reactor containment vessel 3 is provided with interspace radiation fins 10 in the interspace between the inner containment wall 4 and the outer containment wall 5.

3. A molten salt reactor cooling system according to claim 1 or 2, wherein the outer surface of the outer containment wall 5 is provided with outer radiation fins 11.

4. A molten salt reactor cooling system according to any one of the above claims, wherein an air separator 12 is provided in the flow path and the air separator 12 is provided with separator radiation fins 13 facing the outer containment wall 5.

5. A molten salt reactor cooling system according to any one of the above claims, wherein, the outer surface area of the one or more drain tanks 1 is increased with a multiplication factor due to the drain tank radiation fins 9 with a magnitude in the interval of 2 to 8, preferably 3 to 7.

6. A molten salt reactor cooling system according to any one of the above claims, wherein the surface area of the walls forming the interspace between the inner containment wall 4 and the outer containment wall 5 is increased with a multiplication factor due to the interspace radiation fins 10 with a magnitude in the interval of 2 to 8, preferably 3 to 7.

7. A molten salt reactor cooling system according to any one of the above claims, wherein the area of the outer surface of the outer containment wall 5 is increased with a multiplication factor due to the outer radiation fins 11 with a magnitude in the interval of 1.5 to 6, preferably 2.5 to 5.

8. A molten salt reactor cooling system according to any one of the above claims, wherein the area of air separator 12 facing the outer containment wall 5 is increased with a multiplication factor due to the separator radiation fins 13 with a magnitude in the interval of 1.5 to 6, preferably 2.5 to 5.

9. A molten salt reactor cooling system according to any one of the above claims, wherein the interspace radiation fins 10 have an interlocked pattern.

10. A molten salt reactor cooling system according to any one of the above claims, wherein one or more of the fins selected from the group of the drain tank radiation fins 9, interspace radiation fins 10, outer radiation fins 11 or separator radiation fins 13 are made of a steel alloy and has been oxidised to provide an oxidised surface layer.

11. A molten salt reactor cooling system according to any one of the above claims, wherein the emissivity coefficient for one or more of the fins selected from the group of the drain tank radiation fins, interspace radiation fins, outer radiation fins or separator radiation fins is in the interval of 0.5 to 0.96, preferably 0.6 to 0.9, preferably 0.65 to 0.85.

12. A method of removing decay heat from a molten salt reactor with a molten salt reactor cooling system according to any one of claims 1 to 11.

13. A method of removing decay heat from a molten salt reactor according to claim 12, wherein
- the molten fuel salt 2 is drained from a molten fuel salt loop comprising a molten salt reactor core 14 into one or more drain tanks 1, and
- the decay heat is transferred passively from the one or more drain tanks 1 to the flow path open to the ambient atmosphere 6.

14. A method of removing decay heat from a molten salt reactor according to any one or claims 12 or 13, wherein the maximum peak temperature of the outer surface of the one or more drain tanks 1 is in the interval of 650 °C to 725 °C, preferably 670 °C to 723 °C, preferably 670 °C to 710 °C, preferably 680 °C to 700 °C.

15. A method of removing decay heat from a molten salt reactor according to any one or claims 12 to 14, wherein the duration from the initial temperature 650 °C until the maximum peak temperature of the outer surface of the one or more drain tanks 1 is obtained, is in the interval of 0.5 h to 6 h, preferably 1 h to 4 h.

16. A power barge comprising the molten salt reactor cooling system according to any one of claims 1 to 11.
